# EUROPÄISCHE PATENTSCHRIFT

(11) **EP 1 613 881 B1**
(45) Veröffentlichungstag und Bekanntmachung des Hinweises auf die Patenterteilung: **11.07.2012**
(21) Anmeldenummer: 04738469.8
(22) Anmeldetag: 16.04.2004
(51) Int. Cl.: F16K 1/44

(54) **GASREGEL- UND SICHERHEITSVENTIL**
GAS CONTROL AND SAFETY VALVE
SOUPAPE DE REGULATION DE GAZ ET DE SURETE

(30) Priorität: 17.04.2003 DE 10318569
(43) Veröffentlichungstag der Anmeldung: 11.01.2006
(73) Patentinhaber: Saia-Burgess Dresden GmbH, 01257 Dresden (DE)
(72) Erfinder: GAMOT, Michel., F-92500 Rueil-Malmaison (FR); ROSCHKE, Thomas., 01477 Arnsdorf (DE); RÖTHIG, Frank., 01796 Pirna (DE)
(74) Vertreter: Grüneberg, Marcus
(86) Internationale Anmeldenummer: PCT/DE2004/000842
(87) Internationale Veröffentlichungsnummer: WO 2004/097274

(56) Entgegenhaltungen:
- EP-A- 1 128 055
- DE-A- 4 419 487
- DE-A- 4 423 313
- DE-C- 10 114 175
- DE-U- 20 202 127
- GB-A- 1 427 360
- US-A- 2 061 852

## Beschreibung

Die Erfindung betrifft ein integriertes Gasregel- und Sicherheitsventil für Brenner einer modulierbaren Gasheizeinrichtung, dass zur Anpassung an eine veränderliche Wärmelast und zur schlagartigen Abschaltung des Brenngasstromes, insbesondere bei zur Wohnraumbeheizung und Warmwasserversorgung eingesetzten Gasthermen, Verwendung findet.

Stand der Technik ist eine Einheit von einem Modulationsventil mit zwei in Serie geschalteten unabhängigen Sicherheitsventilen. Das Modulationsventil hierbei wird von einem Proportionalmagneten oder einem Schrittmotor feinfühlig verstellt. Die beiden unabhängigen Sicherheitsventile werden durch Elektromagnete betätigt und im stromlosen Zustand von Rückstellfedern verschlossen.

Ein erster bekannter Ansatz zur Vermeidung des hohen Aufwandes von drei Aktoreinheiten, z. B. einen Schrittmotor und 2 Elektromagnete, pro Gasregel-und Sicherheitsventil ist die Integration einer Rückstellfeder in den Modulationsventilantrieb. Damit kann ein Sicherheitsventil entfallen und es werden nur noch zwei Aktoreinheiten pro Gasventil benötigt.

Dokument GB 142760 offenbart ein Doppelwentil mit zwei Aktokeinheiten.

Als weitere Nachteile des Standes der Technik sind die hohen Kosten bei der Fertigung der Gasregel- und Sicherheitsventile und der erhebliche Platzbedarf bei der Einbindung bzw. Installation der Gasregel- und Sicherheitsventile in kompakte Gasheizeinrichtungen, wie z. B. wandhängende Gasthermen, zu nennen.

Aufgabe der Erfindung ist es, ein Gasregel- und Sicherheitsventil für Brenner einer modulierbaren Gasheizeinrichtung vorzuschlagen, bei dem die funktionsbedingten und sicherheitstechnischen Bauteile auf engsten Bauraum konzentriert angeordnet werden und das Gasregel- und Sicherheitsventil damit kleiner wird sowie kostengünstiger zu fertigen ist.

Die Aufgabe wird durch die Merkmale des Gasregel- und Sicherheitsventils für Brenner einer modulierbaren Gasheizeinrichtung gemäß Patentanspruch 1 gelöst. Weitere vorteilhafte Ausgestaltungen sind in der Beschreibung und den Zeichnungen enthalten und Gegenstand der zugehörigen Unteransprüche.

Erfindungsgemäß ist vorgesehen, dass das Gasregel- und Sicherheitsventil mindestens ein Gehäuse mit einem Einlasskanal und einen Auslasskanal aufweist, wobei zwischen dem Einlasskanal und dem Auslasskanal ein elektrisch steuerbares erstes Schließelement angeordnet ist, das eine Antriebsachse, einen am ersten Ende auf der Ventilseite der Antriebsachse angeordneten Drosselkörper sowie ein auf das Schließelemente wirkendes erstes vorgespanntes Federelement aufweist, das am zweiten Ende der Antriebsachse angeordnet ist. Das erste Schließelement gibt in Abhängigkeit eines von einer Steuer- und Regeleinrichtung der Gasheizeinrichtung gelieferten elektrischen Signals entgegen der Federkraftwirkung des ersten Federelements den Auslasskanal als Strömungspfad für ein Gas progressiv frei. Zusätzlich ist ein zweites Schließelement, dass ebenso wie das erste Schließelement koaxial an der Antriebsachse für den Drosselkörper positioniert ist, im Gehäuse vorgesehen.

Das zweite Schließelement besteht aus einem die Antriebsachse ringförmig umschließenden Anker, einem mit diesem in axialer Wirkverbindung stehenden Verschlusskörper und einem zweiten vorgespannten Federelement, das konzentrisch um den Anker zwischen dem Verschlusskörper und einer Gehäusewandung angeordnet ist. Die der Antriebsachse zugewandte innere Mantelfläche des Ankers umschließt die Antriebsachse nahezu kontaktlos, so dass die Antriebsachse im Anker erfindungsgemäß gelagert und geführt wird. Dabei bildet sich zwischen dem Anker und der Antriebsachse ein Ringspalt aus.

Das erste Schließelement und das zweite Schließelement sind derart entgegen der Federkraftwirkung der zugehörigen Federelemente unabhängig voneinander elektrisch steuerbar ausgebildet, dass in Abhängigkeit eines von einer Steuer- und Regeleinrichtung der Gasheizeinrichtung gelieferten elektrischen Signals der Auslasskanal als Strömungspfad für das Gas freigegeben wird. Im stromlosen Zustand des Gasregel- und Sicherheitsventils verschließen der Drosselkörper des ersten Schließelements und das Verschlusselement des zweiten Schließelements den Auslasskanal im Verschlussbereich des Gasregel- und Sicherheitsventils aufgrund der Federkraftwirkung der zugehörigen Federelemente gasdicht.

Die Gemeinsamkeit beider Schließelemente besteht darin, dass beide Schließelemente mit jeweils einem vorgespannten Federelement beaufschlagt sind. Der signifikante Unterschied in der Funktion beider Schließelemente besteht allerdings darin, dass das erste Schließelement eine Regelfunktion zur Anpassung des Gasstroms an eine veränderliche Wärmelast übernimmt und das zweite Schließelement ausschließlich als Sicherheits-Absperreinrichtung eingesetzt wird.

Der Drosselkörper des ersten Schließelements weist dazu funktionsbedingt eine gleichprozentige Ventilkennlinie zur Modulation des zur Versorgung des Brenners der Gasheizeinrichtung benötigten Gasstroms auf. Der Vorteil dieser gleichprozentigen Kennlinie besteht darin, dass variable Versorgungsdrücke besser stabilisiert werden können und damit die Gefahr eines schwingenden Regelkreises unterbunden wird.

Der Verschlusskörper des zweiten Schließelements übernimmt dann die besagte Funktion einer Sicherheitsabsperrvorrichtung, wenn das Gasregel- und Sicherheitsventil stromlos geschaltet ist. Bei Spannungsausfall wird der Auslasskanal als Strömungspfad gasdicht verschlossen, indem sich das zwischen einer Gehäusewandung und dem Verschlusskörpers angeordnete Federelement entspannt.

Im Brennerbetrieb wird durch Spannungsbeaufschlagung der Anker dieses zweiten Schließelements entgegen der Federkraftwirkung des zweiten Federelements derart in Richtung des Motors angezogen, dass der Auslasskanal in seinem Querschnitt vollständig freigegeben wird. Der Verschlusskörper kann jedwede Querschnittsform aufweisen.

Dem Verschlusskörper und dem Drosselkörper sind jeweils passfähige Ventilsitze zugeordnet, auf denen sie aufliegen, und die im Verschlussbereich des Gasregel- und Sicherheitsventils ringförmig ausgebildet sind. Die Ventilsitze sind derart kaskadenartig abgestuft, das im Schließzustand, also im stromlosen Zustand des Gasregel- und Sicherheitsventils, der Verschlusskörper und der Drosselkörper als Stirnflächen ein abgeschlossenes zylinderförmiges Raumvolumen einschließen.

Etwaige Überdrücke des in diesem Raumvolumen eingeschlossenen Gases werden erfindungsgemäß dadurch unterbunden, dass das dem Einlasskanal zugewandte Schließelement zuerst absperrt und anschließend das dem Auslasskanal zugewandte Schließelement den Auslasskanal als Strömungspfad verschließt. Etwaige Überdrücke des Gases werden in Richtung des Brenners abgebaut, so dass eine gefahrlose Betriebsweise des Gasregel- und Sicherheitsventils im Havariefall realisiert werden kann. Damit kann unverbranntes Gas problemlos aus dem Auslasskanal des Gasregel- und Sicherheitsventils strömen.

Zur Realisierung eines schnellen Verschließens des Auslasskanals als Strömungspfad im Havariefall sind kurze Stellzeiten der Schließelemente notwendig. Diesem Erfordernis wird dadurch Rechnung getragen, indem die Stellwege der Schließelemente besonders gering bemessen sind. Für den Anker mit dem angeschlossenen Verschlusskörper des zweiten Schließelements ist ein bevorzugter Stellweg bis zu 2 mm und für die Antriebsachse mit angeschlossenem Drosselkörper des ersten Schließelements bis zu 6mm ausreichend bemessen.

Der Anker des zweiten Schließelements weist ferner ein gasdicht ausgebildetes Dichtelement auf, das z. B. ringförmig zwischen dem Anker und der Antriebsachse des ersten Schließelements angeordnet ist. Sofern, wie zuvor beschrieben, im Havariefall die Schließelemente den Auslasskanal als Strömungspfad verschließen, wird ein etwaiges Rückströmen des Gases durch den sich ausbildenden Ringspalt zwischen Anker und der Antriebsachse unterbunden. Das Dichtelement ist hitzebeständig, verschleißfrei und auswechselbar ausgebildet.

Ein besonderer Vorteil der Erfindung besteht darin, dass die Bewegungs- und Stellrichtung der Schließelemente der Strömungsrichtung des Gases entspricht. Während bei bekannten Lösungen die Schließelemente orthogonal zur Strömungsrichtung des Gases das Gasregel- und Sicherheitsventil verschließen und damit ein nicht unerheblicher Platzbedarf zur Anordnung der einzelnen unabhängig voneinander wirkenden Schließelemente benötigt wird, sind nach der Konzeption der Erfindung die Schließelemente strömungsgünstig und konzentriert im Gasregel- und Sicherheitsventil angeordnet. Der auftretende Druckabfall über das Ventil ist damit äußerst gering.

Die signifikanten Vorteile und Merkmale der Erfindung gegenüber dem Stand der Technik sind im Wesentlichen:
- koaxiale Anordnung der Schließelemente zueinander und damit Konzentration der Bauelemente auf engsten Bauraum,
- strömungsgünstige Anordnung und Stellrichtung der Schließelemente in Strömungsrichtung des Gases und damit geringer Druckabfall über dem Gasregel- und Sicherheitsventil und
- zeitversetztes Schließen der Schließelemente in Richtung der Niederdruckseite des Gasregel- und Sicherheitsventils im stromlosen Zustand und damit gefahrlose Abführung der unverbrannten Gasmengen.

Nachstehend wird die Erfindung beispielhaft anhand der folgenden Zeichnungen näher erläutert.

Dabei zeigen:
- Fig.1: Querschnitt des Gasregel- und Sicherheitsventils mit einer ersten Ausführungsform des Gehäuses
- Fig. 2: Querschnitt des Gasregel- und Sicherheitsventils mit einer zweiten Ausführungsform des Gehäuses

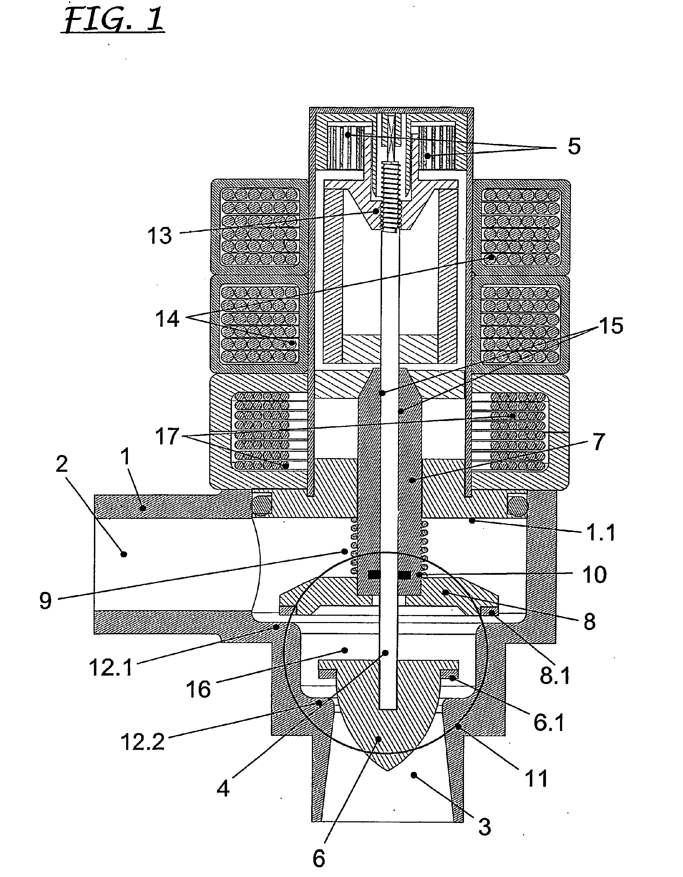

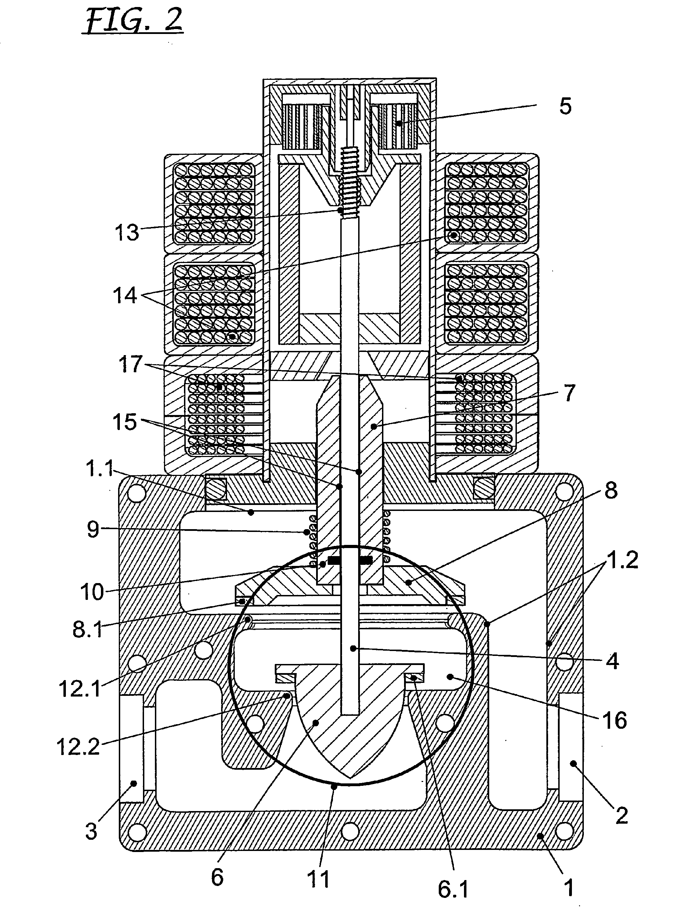

Fig. 1 und Fig. 2 illustrieren den Querschnitt des Gasregel- und Sicherheitsventils im Verschlussbereich 11 sowie im Bereich der Wicklungen 14 und 17. In Fig. 1 sind der Einlasskanal 2 und der Auslasskanal 3 orthogonal zueinander angeordnet, so dass das Gas einer Strömungsrichtungsumlenkung um 90° unterzogen wird. Das Gas strömt in konventioneller Weise in den Einlasskanal 2 und wird entsprechend der Vorgabe der Steuer- und Regeleinrichtung des Gasheizeinrichtung mittels des Drosselkörpers 6 im Verschlussbereich 11 des Gasregel- und Sicherheitsventils in seinem Volumenstrom gesteuert und über den Auslasskanal 3 dem nichtdargestellten Brenner der Gasheizeinrichtung zugeführt.

Fig. 2 zeigt einen modifizierten Aufbau des Gehäuses 1, bei dem der Einlasskanal 2 und der Auslasskanal 3 im Sinne eines Durchgangsventils angeordnet sind und die Führung des Gasstromes zum und vom Verschlussbereich 11 im Gehäuses 1 erfolgt. Dabei dienen die gasberührenden Innenwandungen 1.2 des Gehäuses 1 zur Gasführung- und leitung.

Das erste Schließelement besteht aus einem vorzugsweise von einem Schrittmotor angetriebenen Linearantrieb, der als Antriebsachse 4 angedeutet ist, einem am zweiten Ende der Antriebsachse 4 im Motorbereich angeordneten vorgespannten ersten Federelement 5 und einem am ersten Ende der Antriebsachse 4 im Verschlussbereich 11 angeordneten Drosselkörper 6. Die Steuerung des ersten Schließelements erfolgt in Abhängigkeit eines von einer Steuer- und Regeleinheit gelieferten Signals. Die Stellrichtung entspricht dabei der verlängerten Motorachse in Richtung des Auslasskanals 3. Der eingesetzte Linearantrieb eignet sich besonders gut für das Umsetzen kleinerer Stellwege im Zehntelmillimeter-Bereich. Der Drosselkörper 6 des ersten Schließelements ist im Querschnitt elliptisch geformt, wodurch während des Öffnungsvorgangs die vom Gas durchströmbare Querschnittsfläche progressiv freigegeben wird. Im Randbereich des Drosselkörpers 6 sind Dichtflächen 6.1 ausgebildet, die im Schließzustand auf dem zugehörigen Ventilsitz 12.2 aufliegen. Der Drosselkörper 6 ist lösbar mit der Antriebsachse 4 verbunden mit dem Zweck, verschiedenartige Drosselkörper 6 mit unterschiedlichen Ventilkennlinien zur Anpassung an verbrauchertypische Wärmelasten einsetzen zu können.

Das zweite Schließelement, umfassend einen elektrisch steuerbaren Anker 7, einen in axialer Wirkverbindung mit diesem stehenden Verschlusskörper 8 und ein vorgespanntes zweites Federelement 9, welches zwischen dem Verschlusskörper 8 und einer Gehäusewandung 1.1 des Gehäuses 1 verspannt ist, ist koaxial zum ersten Schließelement im Gehäuse 1 des Gasregel- und Sicherheitsventils angeordnet. Der Anker 7 führt und lagert die Antriebsachse 4 des ersten Schließelements im unteren Bereich des Stellweges der Antriebsachse 4. Zwischen Anker 7 und Antriebsachse 4 bildet sich ein Ringspalt 15 aus. Der Anker 7 ist von den als Torus ausgebildeten Wicklungen des Elektromagneten 17 umfasst, wobei diese Wicklungen 17 von einem von einer Steuer- und Regeleinrichtung der Gasheizeinrichtung gelieferten Signal beaufschlagbar sind. Der am unteren Ende des Ankers 7 angeordnete Verschlusskörper 8 ist an seiner Unterseite tellerförmig ausgebildet und verschließt den Auslasskanal 3 flachdichtend. Die im Randbereich des Verschlusskörpers 8 angeordneten Dichtflächen 8.1 liegen gasdicht auf dem zugehörigen Ventilsitz 12.1 des Gehäuses 1 auf.

In Strömungsrichtung des Gases ist der Ventilsitz 12.1 des Verschlusskörpers 8 vor dem Ventilsitz 12.2 des Drosselkörpers 6 angeordnet. Der Durchmesser des Verschlusskörpers 8 und die Weite des zugehörigen Ventilsitzes 12.1 sind größer als der Durchmesser des Drosselkörpers 6 und die Weite dieses zugehörigen Ventilsitzes 12.2. Beide Ventilsitze 12.1, 12.2 sind derart kaskadenartig zueinander ausgebildet, dass im stromlosen Zustand des Gasregel- und Sicherheitsventils beide gasdicht sitzende Schließelemente als Stirnflächen ein zylinderförmiges Raumvolumen bzw. eine Kammer 16 einschließen.

Im unteren Bereich des Ankers 7 des zweiten Schließelements ist zwischen Antriebsachse 4 und Anker 7 ein ringförmiges Dichtelement 10 angeordnet, welches den Ringspalt 15 gasdicht verschließt. In einer bevorzugten Ausgestaltung dieser Dichtelemente 10 sind die Dichtelemente als Dichtringe ausgebildet, wobei zwei hintereinander angeordnete Dichtringe eine vollständige Gasdichtheit sichern.

Die beiden Schließelemente sind unabhängig voneinander steuerbar ausgebildet, wobei ein einzelnes elektrisches Signal, lieferbar durch die Steuer- und Regeleinrichtung der Gasheizeinrichtung, ausreicht, um beide Schließelemente anzusteuern.

Im Fehlerfall, z. B. bei Stromausfall, fungieren diese beiden Schließelemente des erfindungsgemäßen Gasregel- und Sicherheitsventils als Sicherheitseinrichtung, da die jeweils zugehörigen Federnelemente in kurzer Zeit zum Verschluss der seriell nacheinander angeordneten Ventile führen.

### LISTE DER BEZUGSZEICHEN

- 1: Gehäuse
- 1.1: Gehäusewandung
- 1.2: Innenwandung des Gehäuses 1
- 2: Einlasskanal
- 3: Auslasskanal
- 4: Antriebsachse
- 5: erstes Federelement
- 6: Drosselkörper
- 6.1: Dichtfläche des Drosselkörpers 6
- 7: Anker
- 8: Verschlusskörper
- 8.1: Dichtfläche des Verschlusskörpers 8
- 9: zweites Federelement
- 10: Dichtelemente
- 11: Verschlussbereich
- 12: Ventilsitze
- 12.1: Ventilsitz des Verschlusskörpers 8
- 12.2: Ventilsitz des Drosselkörpers 6
- 13: Linearantrieb
- 14: Wicklungen des Motors
- 15: Ringspalt
- 16: Kammer
- 17: Wicklung des Elektromagneten

## Patentansprüche

1. Gasregel- und Sicherheitsventil für Brenner einer modulierbaren Gasheizeinrichtung, mindestens aufweisend ein Gehäuse (1) mit einem zwischen einem Einlasskanal (2) und einem Auslasskanal (3) angeordneten elektrisch steuerbaren ersten Schließelement, das eine mittels eines Linearantriebs angetriebene Antriebsachse (4), einen am ersten Ende der Antriebsachse (4) angeordneten Drosselkörper (6) sowie ein auf das Schließelement wirkendes erstes vorgespanntes Federelement (5) aufweist, das am zweiten Ende der Antriebsachse (4) angeordnet ist, wobei das erste Schließelement in Abhängigkeit eines von einer Steuer- und Regeleinrichtung der Gasheizeinrichtung gelieferten elektrischen Signals entgegen der Federkraftwirkung des ersten Federelements (5) den Auslasskanal (3) als Strömungspfad für ein Gas progressiv freigibt, **dadurch gekennzeichnet, dass** ein zweites Schließelement im Gehäuse (1) vorgesehen ist und das zweite Schließelement ebenso wie das erste Schließelement koaxial an der Antriebsachse (4) für den Drosselkörper (6) positioniert ist.

2. Gasregel- und Sicherheitsventil nach Anspruch 1, **dadurch gekennzeichnet, dass** die Antriebsachse (4) durch einen von der Steuer- und Regeleinrichtung gesteuerten Linearantrieb modulierend verstellbar ausgebildet ist.

3. Gasregel- und Sicherheitsventil nach Anspruch 1 oder 2, **dadurch gekennzeichnet, dass** das zweite Schließelement einen die Antriebsachse (4) ringförmig umschließenden Anker (7) und einen mit diesem in axialer Wirkverbindung stehenden Verschlusskörper (8) aufweist, die über die Steuer- und Regeleinrichtung der Gasheizeinrichtung mittels der Wicklung des Elektromagneten (17) elektrisch steuerbar ausgebildet sind und ein zweites vorgespanntes Federelement (9) vorgesehen ist, das konzentrisch um den Anker (7) zwischen dem Verschlusskörper (8) und einer Gehäusewandung (11) angeordnet ist, wobei zwischen Anker (7) und Antriebsachse (4) ein Ringspalt (15) vorhanden ist.

4. Gasregel- und Sicherheitsventil nach einem der Ansprüche 1 bis 3, **dadurch gekennzeichnet, dass** die Antriebsachse (4) des ersten Schließelements im ringförmigen Anker (7) des zweiten Schließelements axial beweglich gelagert und geführt ist.

5. Gasregel- und Sicherheitsventil nach einem der Ansprüche 1 bis 4, **dadurch gekennzeichnet, dass** der Anker (7) des zweiten Schließelements mindestens ein gasdicht ausgebildetes Dichtelement (10) aufweist, welches zwischen dem Anker (7) des zweiten Schließelements und der Antriebsachse (4) des ersten Schließelements angeordnet ist.

6. Gasregel- und Sicherheitsventil nach einem der Ansprüche 1 bis 5, **dadurch gekennzeichnet, dass** im stromlosen Zustand des Gasregel- und Sicherheitsventils der Drosselkörper (6) und der Verschlusskörper (8) auf jeweils einem Ventilsitz (12) aufliegen und dichten, wobei der Schließvorgang des Drosselkörpers (6) und der Schließvorgang des Verschlusskörpers (8) unabhängig voneinander erfolgen.

7. Gasregel- und Sicherheitsventil nach Anspruch 6, **dadurch gekennzeichnet, dass** die Ventilsitze (12.1, 12.2) des Verschlusskörpers (8) und des Drosselkörpers (6) im Verschlussbereich (11) des Gasregel- und Sicherheitsventils kaskadenartig zueinander abgestuft sind.

8. Gasregel- und Sicherheitsventil nach einem der Ansprüche 1 bis 7, **dadurch gekennzeichnet, dass** im Verschlussbereich (11) des Gasregel- und Sicherheitsventils die Bewegungs- und Stellrichtung der Schließelemente der Strömungsrichtung des Gases entspricht.

## Claims

1. Gas control and safety valve for burners of a modulatable gas heating apparatus, at least comprising a casing (1) with an electrically controllable first closing element disposed between an inlet channel (2) and an outlet channel (3) and having a drive axis (4) driven by means of a linear drive system, a throttling body (6) disposed at the first end of the drive axis (4) as well as a first pre-stressed spring element (5) acting on the closing element and disposed at the second end of the drive axis (4), with the first closing element, against the spring action of the first spring element (5), progressively unblocking the outlet channel (3) as a flow path for a gas in dependence of an electrical signal supplied by the control device of the gas heating apparatus, **characterized by** that a second closing element is provided in the casing (1) and the second closing element, like the first closing element, is positioned coaxially at the drive axis (4) for the throttling body (6).

2. Gas control and safety valve according to claim 1 **characterized by** that the drive axis (4) is modulatable by a linear drive system controlled by the control device.

3. Gas control and safety valve according to claim 1 or 2 **characterized by** that the second closing element has an armature (7) surrounding the drive axis (4) in an annular design and a closing body (8) in operative connection with said armature, which are designed to be electrically controllable by the control device of the gas heating apparatus using the winding of the electromagnet (17) and a second pre-stressed spring element (9) is provided in concentric arrangement around the armature (7) between the closing body (8) and a casing wall (1.1), an annular gap (15) being present between the armature (7) and the drive axis (4).

4. Gas control and safety valve according to any of the claims 1 to 3 **characterized by** that the drive axis (4) of the first closing element is mounted and guided in an axially mobile way in the annular armature (7) of the second closing element.

5. Gas control and safety valve according to any of the claims 1 to 4 **characterized by** that the armature (7) of the second closing element has at least one gas-tight sealing element (10) which is disposed between the armature (7) of the second closing element and the drive axis (4) of the first closing element.

6. Gas control and safety valve according to any of the claims 1 to 5 **characterized by** that, when the gas control and safety valve is de-energized, the throttling body (6) and the closing body (8) each rest on a valve seat (12) to seal, the closing procedure of the throttling body (6) and the closing procedure of the closing body (8) being performed independently of each other.

7. Gas control and safety valve according to claim 6 **characterized by** that the valve seats (12.1, 12.2) of the closing body (8) and of the throttling body (6) in the closing area (11) of the gas control and safety valve are arranged as stepped cascades in relation to each other.

8. Gas control and safety valve according to any of the claims 1 to 7 **characterized by** that in the closing area (11) of the gas control and safety valve the direction of movement and actuation of the closing elements corresponds to the gas flow direction.

## Revendications

1. Vanne de réglage du gaz et de sécurité pour brûleurs d'un chauffage au gaz modulable, disposant au minimum d'un boîtier (1) avec un premier élément de fermeture à commande électrique disposé entre une conduite d'entrée (2) et une conduite de sortie (3), et pourvu d'un axe d'entraînement (4) entraîné par un système d'entraînement linéaire, d'un corps d'étranglement (6) positionné sur la première extrémité de l'axe d'entraînement (4) ainsi que d'un premier élément de ressort (5) précontraint disposé sur la deuxième extrémité de l'axe d'entraînement (4) et agissant sur l'élément de fermeture, le premier élément de fermeture débloquant progressivement la conduite de sortie (3) comme voie d'écoulement pour un gaz au moyen d'un signal électrique délivré par un dispositif d'asservissement du chauffage à gaz et contre la tension du premier élément de ressort (5), **caractérisée en ce qu'**un deuxième élément de fermeture est prévu dans le boîtier (1) et que le deuxième élément de fermeture, de même que le premier élément de fermeture, est positionné de manière coaxiale sur l'axe d'entraînement du corps d'étranglement (6).

2. Vanne de réglage du gaz et de sécurité selon la revendication 1, **caractérisée en ce que** l'axe d'entraînement (4) est ajustable de façon modulable par un système d'entraînement linéaire commandé par le dispositif d'asservissement.

3. Vanne de réglage du gaz et de sécurité selon la revendication 1 ou 2, **caractérisée en ce que** le deuxième élément de fermeture est pourvu d'un induit (7) encerclant annulairement l'axe d'entraînement (4) et d'un corps de fermeture (8) en liaison d'action axiale avec celui-ci, électriquement commandé par le dispositif d'asservissement du chauffage à gaz au moyen de la bobine de l'électro-aimant (17) et d'un deuxième élément de ressort (9) précontraint disposé de manière concentrique autour de l'induit (7) entre le corps de fermeture (8) et un paroi du boîtier (1.1), un entrefer annulaire (15) étant présent entre l'induit (7) et l'axe d'entraînement (4).

4. Vanne de réglage du gaz et de sécurité selon une des revendications 1 à 3, **caractérisée en ce que** l'axe d'entraînement (4) du premier élément de fermeture est monté de manière axialement mobile dans l'induit annulaire (7).

5. Vanne de réglage du gaz et de sécurité selon une des revendications 1 à 4, **caractérisée en ce que** l'induit (7) du deuxième élément de fermeture est pourvu au moins d'un élément d'étanchéité (10) étanche au gaz, disposé entre l'induit (7) du deuxième élément de fermeture et l'axe d'entraînement (4) du premier élément de fermeture.

6. Vanne de réglage du gaz et de sécurité selon une des revendications 1 à 5, **caractérisée en ce que** la vanne de réglage du gaz et de sécurité étant sans courant, le corps d'étranglement (6) et le corps de fermeture (8) restent chacun sur un siège de vanne (12) et ferment hermétiquement, la procédure de fermeture du corps d'étranglement (6) et la procédure de fermeture du corps de fermeture (8) étant indépendant l'une de l'autre.

7. Vanne de réglage du gaz et de sécurité selon la revendication 6, **caractérisée en ce que** les sièges de vanne (12.1, 12.2) du corps de fermeture (8) et du corps d'étranglement (6) sont disposés en forme de cascade l'un par rapport à l'autre dans la zone de fermeture (11) de la vanne de réglage du gaz et de sécurité.

8. Vanne de réglage du gaz et de sécurité selon une des revendications 1 à 7, **caractérisée en ce que**, dans la zone de fermeture (11) de la vanne de réglage du gaz et de sécurité, le sens de mouvement et d'actionnement des éléments de fermeture correspond au sens d'écoulement du gaz.
